# EUROPEAN PATENT SPECIFICATION

(11) **EP 1 369 392 B1**
(45) Date of publication and mention of the grant of the patent: **16.06.2010**
(21) Application number: 03076688.5
(22) Date of filing: 02.06.2003
(51) Int. Cl.: C03B 23/18, C03B 35/26

(54) **Machine for the continuous forming of glass vials or similar containers of the same size**
Maschine zur kontinuierlichen Herstellung von Glasampullen oder von ähnlichen Behältern der gleichen Grösse
Machine pour la formation en continu d'ampoules en verre ou de containeurs similaires de même taille

(30) Priority: 03.06.2002 IT MI20021195
(43) Date of publication of application: 10.12.2003
(73) Proprietor: Euromatic s.r.l., 24047 Treviglio (Bergamo) (IT)
(72) Inventor: Vaporesi, Donino, 24047 Treviglio (Bergamo) (IT)
(74) Representative: De Gregori, Antonella

(56) References cited:
- DE-C- 531 266
- FR-A- 1 494 012
- GB-A- 626 567
- GB-A- 773 168
- US-A- 1 489 837
- US-A- 3 736 118
- US-A- 4 330 317
- US-B2- 6 341 502

## Description

The present invention relates to a machine for the continuous forming of glass vials or similar containers of the same size.

In the field of use of machines to produce glass containers, such as glass vials and the like for pharmaceutical or similar use, finished vials ready to be treated and filled with a medicinal product or the like must have extremely limited tolerances. In fact, these vials must be produced with precise measurements and be almost perfect axially to be subsequently processed in automatic packaging machines.

An example of a machine for the continuous forming of glass vials or similar container of the same size comprising two rotary carousels is known from document GB-A-626567.

Machines already exist to form these vials or similar containers in glass, constituted by a principal carousel structure which receives the glass tubes in half of the circumference. A mouth is then produced at a lower free end of these tubes and the other end is closed, all using a supporting element on the carousel. A portion thus shaped and closed in some way is then obtained from this tube, which is transferred and deposited on a secondary carousel associated with the principal carousel. In this second carousel the portion is processed and closed as correctly as possible at the other end and unloaded ready for all subsequent processing.

In the second half of the circumference of the principal carousel an operation similar to the one on the first half of the circumference takes place in succession, which is associated with a further second secondary carousel which receives one after another the portions of tube equipped with a mouth and closed and performs finishing as in the first case.

It is easy to perceive that, although explained briefly, processing of these glass tubes and operation of these prior art machines is fairly complex. In fact, during a simple rotation of half of the principal carousel a portion must be detached from each glass tube, which must be shaped at one end to form the preselected mouth and closed at the other end. In this semi-finished condition it must be ready to be transferred and moved to one of the two secondary carousels to be closed definitively at the other end according to a flat surface, all with the aid of burners which maintain the portion of glass being treated hot in both the carousels to allow the various units to process it.

The machine constituted by a principal carousel and by two secondary carousels, in addition to being of fairly complex construction, has considerable operating difficulties.

A problem related to the two halves of the first forming carousel is caused by the fact that two series of containers may be produced with dimensions and forms that do not correspond perfectly due to calibration that is not absolutely equal of the operating elements of the two halves of the principal carousel.

Yet another problem relates to obtaining a container with a small diameter such as a vial or the like which is not perfectly centred in relation to its axis and is not perfectly symmetrical. In fact, an incorrect form could cause problems in subsequent packaging machines both related to poor stability and difficulty in centring in relation to the dispensers of the products being fed.

The object of the present invention is therefore to produce a machine for the continuous forming of glass vials or similar containers of the same size which solves the aforesaid technical problems, has a simple structure adaptable to the various different forms which the glass vials or containers may have.

Another object of the present invention is to produce a machine for the continuous forming of glass vials or similar containers of the same size which is capable of maintaining the position of the containers during processing at a higher speed than those currently used in order as to be able to effect rapid and automatic handling.

Yet another object of the present invention is to produce a machine for the continuous forming of glass vials or similar containers of the same size which makes it possible to obtain perfectly shaped and stable containers, without any problems of form.

A further object of the present invention is to produce a machine for the continuous forming of glass vials or similar containers of the same size which considerably increases the productivity in relation to prior art machines.

These general objects according to the present invention are attained by producing a machine for the continuous forming of glass vials or similar containers of the same size as set forth in claim 1.

Further characteristics are provided in the dependent claims.

The characteristics and advantages of a machine for the continuous forming of glass vials or similar containers of the same size according to the present invention shall become more apparent from the nonlimiting exemplificative description hereunder, with reference to the attached schematic drawings, in which:

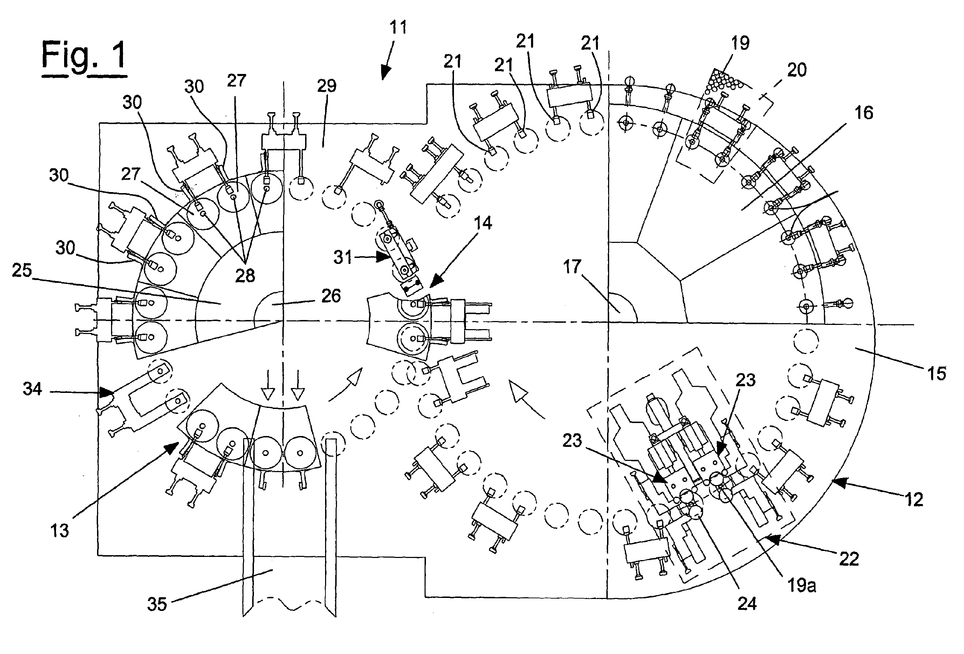

figure 1 is an entirely schematic top plan view of a machine for the continuous forming of glass vials or similar containers of the same size according to the present invention,

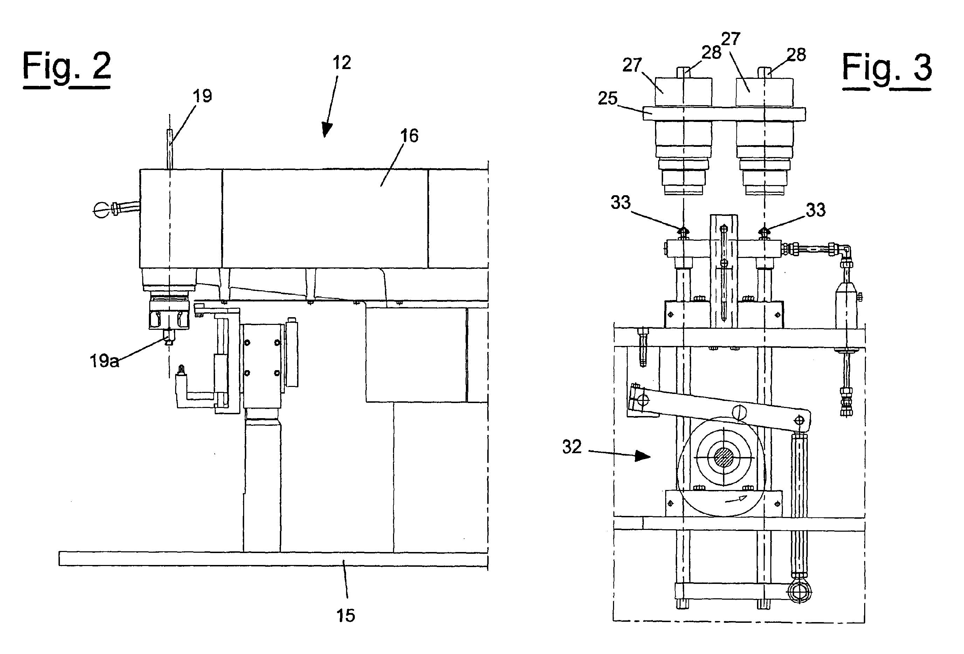

figure 2 is a side elevation view showing a portion of the first carousel of the machine in figure 1,
figure 3 is a side elevation view showing a portion of the second carousel of the machine in figure 1.

With reference to the figures, these show a machine for the continuous forming of glass vials or similar containers of the same size according to the present invention.

This machine, indicated as a whole with 11, essentially comprises a pair of rotary carousels disposed in succession and strictly correlated from the point of view of operation.

In fact, it has a principal rotary carousel 12 and a second rotary carousel 13 which partially interpenetrate in a connection area provided with a transfer station 14 for semi-finished vials.

The principal rotary carousel 12 has a lower fixed load-bearing structure 15 on which an upper rotary plate 16 is disposed around a central shaft 17. The rotary plate 16 carries a plurality of pairs of supporting elements for glass tubes 19, perimetric, disposed according to a circumference and spaced at a pre-established distance along this circumference. During processing portions of glass tube or semi-finished products are obtained from these glass tubes 19 which produce the single vial or similar container. The initial glass tubes 19 are placed in a station in which there is a loader 20, in a fixed position in relation to the rotary plate 16.

The aforesaid supporting elements are carried to this loader 20, when they reach it empty or emptied, and receive the lower end of a glass tube 19. They then determine downward movement to individuate a projecting terminal portion 19a as a function of the size of the vial to be obtained, or the desired and preselected dimension and then continue in the rotation with stepped forward movement of the rotary upper plate 16.

The terminal portions 19a of the glass tubes 19 are already pre-heated in the phase when they remain over this rotary upper plate 16.

In any case, pairs of heaters 21 are placed in the fixed load-bearing structure 15, disposed according to intervals corresponding to the rotating forward step of the rotary upper plate 16, which act on respective pairs of lower ends 19a of tubes 19 carried by the various pairs of supporting elements and projecting downwards.

This principal rotary carousel 12 has at least one shaping station 22 in which centring and shaping elements act on the ends of pairs of heated glass tubes 19a to produce a shaped mouth. Naturally, these stations 22 may also be disposed in a higher number in order to perform shaping of the mouth in various subsequent phases as a function of the different dimensions of the final mouth in relation to the initial glass tube 19. In particular this shaping station 22 has a centring group 23 which acts on each supporting element or in the example on a pair of supporting elements in order to guarantee centring of the tube in relation to external shaping elements 24. In this way the vials thus produced are perfectly axial.

Moreover, a lower end-forming station is provided in which either the initial portion cut to size of the glass tube 19 is obtained or an end of this glass tube 19 from which a partially processed vial or the like (not shown) was previously detached is re-opened.

Naturally, this is all performed on pairs of glass tubes 19 carried by the principal rotary plate 16 by pairs of shaping, heating, cutting and lowering elements via the supporting elements.

The transfer station 14 is placed in proximity to the end-forming area to allow removal of the two semi-finished products equipped with finished mouth and lower two new ends 19a of glass tubes on which to obtain a similar mouth.

The second carousel 13 or the secondary carousel which produces the finish of the closed part at the second end of the vial is disposed at this transfer station 14.

Also in this case a rotary plate 25 is provided around a central shaft 26 carrying pairs of supporting elements 27, such as self-centring chucks or other similar elements, which receive pairs of semi-finished vials, a bottom of which is shown in 28.

Placed below this further rotary plate 25 which carries pairs of supporting elements 27 is a load-bearing structure 29 provided with further pairs of heaters 30 which act on the closed end of the semi-finished vial 28.

An actuator unit 32 of pusher elements 33 for gauge elements (not shown) of the mouth of the semi-finished vial contained in the supporting elements 27 is disposed in a first station 31. For example, the rotary plate 25 carries both the supporting elements 27 and the gauge elements, while the actuator unit 32 is provided in a fixed position on the load-bearing structure 29; this actuator unit 32 via its pushers, which can be moved upwards and downwards, determines movement of the gauge elements and thus correct positioning of the bottom of the vial.

Once correct positioning of the semi-finished product has been identified in relation to a measurement of reference of the finished vial or the necessary position of the bottom of the vial in this station, the rotary plate 25 is then rotated step by step, to adequately heat the bottom via the various heaters 30.

Subsequent to heating, the bottom of the vial is ground in a finishing station 34 according to a plane perfectly perpendicular to the axis of the vial and to the preselected measurement of the vial with the strict tolerance required.

In a subsequent loading station 35 the pair of finished vials to be used in sterilization and packaging processing of the preselected medicinal product are released.

A machine according to the invention thus performs continuous forming of glass vials or similar containers of the same size, with a considerable increase in productivity.

It must not however be underestimated that due to the arrangement of the various stations distributed on the two associated carousels it is possible to obtain vials with a high level of dimensional precision, and at high production speeds.

Moreover, with a machine according to the invention containers all of identical dimensions and shapes and corresponding perfectly with one another are produced, unlike the case of machines with rotary carousels divided into two operating halves.

Yet another advantage is that a container with a small diameter is obtained, such as a vial or the like, which is perfectly centred in relation to its axis and is also perfectly symmetrical. All this is obtained with extreme stability and easy handling, eliminating the problems in packaging machines caused by poor stability and difficulty in centring in relation to the dispensers of the products being fed.

In this way it is possible to obtain vials equipped with noteworthy stability during the subsequent processing phases in other machines, which facilitates correct gripping of these vials by any handling device, thanks to the noteworthy stability.

## Claims

1. Machine for the continuous forming of glass vials or similar containers of the same size comprising a structure with a pair of rotary carousels (12, 13) disposed in succession, comprising a first principal rotary carousel (12), disposed upstream, suitable for receiving glass tubes (19) from a loader (20) and being equipped with a rotary plate (16) provided with a plurality of perimetric supporting elements disposed according to a circumference, a lower end (19a) of the glass tube (19) projecting from said supporting elements, said first principal rotary carousel (12) being further equipped with a series of heaters (21) and at least one shaping manipulator (22) of free ends (19a) of each tube (19) to produce a shaped mouth and a closed end (28) in portions of semi-finished tube, and a second rotary carousel (13) suitable for receiving on supporting elements (27) said portions of semi-finished tube or semi-finished vials, equipped with the shaped mouth and the closed end (28), said second rotary carousel (13) being provided with a series of heating elements (30) of said closed end (28) and a finishing unit (34) of said bottom thus disposed, a station for transfer (14) of said semi-finished vials being provided between said two carousels, **characterized in that** said second carousel (13) is provided in a first station with gauge elements of the mouth of the semifinished vial and with pusher elements (33) for said gauge elements of the mouth of said vials, said pusher elements (33) being suitable for carrying said closed end in a predetermined measurement plane, said heaters (21, 30) are disposed on a fixed load-bearing structure and wherein both said first principal rotary carousel (12) and said second rotary carousel (13) have pairs of supporting elements (27) suitable for interacting simultaneously with said heaters (21) and shaping manipulators (22) of free ends (19a) of two tubes (19) and with said ends of the tube, and pairs of pusher elements (33) for gauge elements of the mouth of said vials, with said heaters (30) and said finishing unit (34).

2. Machine as claimed in claim 1, **characterized in that** it has several shaping manipulators (22) for free ends (19a) of each tube disposed one after the other along the perimeter of said first rotary carousel (12).

3. Machine as claimed in claim 1 or 2, **characterized in that** the shaping manipulators (22) have a centring unit (23) which acts on each supporting element or on a pair of supporting elements in order to guarantee centring of the tube in relation to external shaping elements (24).

## Patentansprüche

1. Maschine für das kontinuierliche Formen von Glasfläschchen oder ähnlichen Behältern derselben Größe, umfassend einen Aufbau mit einem Paar rotierender Karussells (12, 13), die nacheinander angeordnet sind, mit einem ersten rotierenden Hauptkarussell (12), das stromaufwärts angeordnet ist, zur Aufnahme von Glasrohren (19) von einer Ladeeinrichtung (20) geeignet ist und mit einer rotierenden Platte (16) ausgestattet ist, die mit einer Vielzahl perimetrischer Stützelemente versehen ist, die gemäß einem Umfang angeordnet sind, wobei ein unteres Ende (19a) des Glasrohres (19) von den Stützelementen vorragt, wobei das erste rotierende Hauptkarussell (12) ferner mit einer Serie von Heizeinrichtungen (21) und zumindest einem Formungsmanipulator (22) von freien Enden (19a) jedes Rohres (19) ausgestattet ist, um eine geformte Mündung und ein geschlossenes Ende (28) in Abschnitten eines halb fertiggestellten Rohres zu erzeugen, und einem zweiten rotierenden Karussell (13), das zur Aufnahme der Abschnitte des halb fertiggestellten Rohres oder halb fertiggestellter Fläschchen auf Stützelementen (27) geeignet ist, die mit der geformten Mündung und dem geschlossenen Ende (28) ausgestattet sind, wobei das zweite rotierende Karussell (13) mit einer Reihe von Heizelementen (30) des geschlossenen Endes (28) und einer Fertigstellungseinheit (34) des somit angeordneten Bodens versehen ist, wobei eine Station zur Übertragung (14) der halb fertiggestellten Fläschchen zwischen den beiden Karussells vorgesehen ist,
**dadurch gekennzeichnet, dass**
das zweite Karussell (13) in einer ersten Station mit Messelementen der Mündung des halb fertiggestellten Fläschchens und mit Schubelementen (33) für die Messelemente der Mündung der Fläschchen versehen ist, wobei die Schubelemente (33) zum Tragen des geschlossenen Endes in einer vorbestimmten Messebene geeignet sind, wobei die Heizeinrichtungen (21, 30) an einem fixierten Last tragenden Aufbau angeordnet sind und wobei sowohl das erste rotierende Hauptkarussell (12) als auch das zweite rotierende Karussell (13) Paare von Stützelementen (27), die zum gleichzeitigen Wechselwirken mit den Heizeinrichtungen (21) und den Formungsmanipulatoren (22) von freien Enden (19a) von zwei Rohren (19) und mit den Enden des Rohres geeignet sind, und Paare von Schubelementen (33) für Messelemente der Mündung der Fläschchen besitzen, mit den Heizelementen (30) und der Fertigstellungseinheit (34).

2. Maschine nach Anspruch 1,
**dadurch gekennzeichnet, dass**
sie verschiedene Formungsmanipulatoren (22) für freie Enden (19a) jedes Rohres besitzt, die nacheinander entlang des Umfangs des ersten rotierenden Karussells (12) angeordnet sind.

3. Maschine nach einem der Ansprüche 1 oder 2,
**dadurch gekennzeichnet, dass**
die Formungsmanipulatoren (22) eine Zentriereinheit (23) besitzen, die auf jedes Stützelement oder auf ein Paar von Stützelementen wirkt, um ein Zentrieren des Rohres in Bezug auf externe Formungselemente (24) sicherzustellen.

## Revendications

1. Machine pour la formation en continu de flacons de verre ou contenants similaires de la même taille comprenant une structure avec une paire de carrousels rotatifs (12, 13) disposés en succession, comprenant un premier carrousel rotatif principal (12), disposé en amont, approprié pour recevoir des tubes de verre (19) à partir d'un chargeur (20) et équipé d'une plaque rotative (16) pourvue d'une pluralité d'éléments de support périmétriques disposés selon une circonférence, une extrémité inférieure (19a) du tube de verre (19) faisant saillie à partir desdits éléments de support, ledit premier carrousel rotatif (12) étant en outre équipé d'une série d'éléments chauffants (21) et d'au moins un manipulateur de façonnage (22) d'extrémités libres (19a) de chaque tube (19) pour produire une embouchure façonnée et une extrémité fermée (28) dans des parties de tube semi-fini, et un second carrousel rotatif (13) approprié pour recevoir sur des éléments de support (27) lesdites parties de tube semi-fini ou flacons semi-finis, équipés de l'embouchure façonnée et l'extrémité fermée (23), ledit second carrousel rotatif (13) étant pourvu d'une série d'éléments chauffants (30) de ladite extrémité fermée (28) et une unité de finition (34) dudit fond ainsi disposé, un poste pour le transfert (14) desdits flacons semi-finis étant prévu entre lesdits deux carrousels, **caractérisé en ce que** ledit second carrousel (13) est pourvu dans un premier poste d'éléments gabarits de l'embouchure du flacon semi-fini et d'éléments poussoirs (33) pour lesdits éléments gabarits de l'embouchure desdits flacons, lesdits éléments poussoirs (33) étant appropriés pour supporter ladite extrémité fermée dans un plan de mesure prédéterminé, lesdits éléments chauffants (21, 30) sont disposés sur une structure de support de charge fixe et dans laquelle ledit premier carrousel rotatif (12) et ledit second carrousel rotatif (13) comportent des paires d'éléments de support (27) appropriés pour réaliser une interaction simultanée avec lesdits éléments chauffants (21) et lesdits manipulateurs de façonnage (22) des extrémités libres (19a) de deux tubes (19) et avec lesdites extrémités du tube, et des paires d'éléments poussoirs (33) pour des éléments gabarits de l'embouchure desdits flacons, avec lesdits éléments chauffants (30) et ladite unité de finition (34).

2. Machine selon la revendication 1, **caractérisé en ce que** elle comporte plusieurs manipulateurs de façonnage (22) pour des extrémités libres (19a) de chaque tube disposés les uns après les autres sur le périmètre dudit premier carrousel rotatif (12).

3. Machine selon la revendication 1 ou 2, **caractérisé en ce que** les manipulateurs de façonnage (22) comportent une unité de centrage (23) qui agit sur chaque élément de support ou sur une paire d'éléments de support afin de garantir le centrage du tube par rapport à des éléments de façonnage externes (24).
